# EUROPEAN PATENT SPECIFICATION

(11) **EP 1 082 889 B1**
(45) Date of publication and mention of the grant of the patent: **18.12.2002**
(21) Application number: 99830562.7
(22) Date of filing: 08.09.1999
(51) Int. Cl.: A01B 33/14

(54) **A system for the rapid coupling of blades for rotary harrows**
Schnellkuppelsystem für Sägeblätter einer Kreissäge
Système de couplage rapide de dent pour herse rotative

(43) Date of publication of application: 14.03.2001
(73) Proprietor: MASCHIO S.p.A., 35011 Campodarsego (Padova) (IT)
(72) Inventor: Maschio, Giorgio, 35011 Campodarsego, Padova (IT)
(74) Representative: Cantaluppi, Stefano

(56) References cited:
- EP-A- 0 211 276
- DE-U- 9 006 000
- FR-A- 2 487 157

## Description

The present invention relates to a system for the rapid coupling of blades for rotary harrows, in accordance with the preamble of the main claim.

In the relevant technical field of the present invention, it is known to secure the blades of a rotary harrow directly to a flanged end of a drive shaft by screw fastening. Also known, for example from European Patent no. 407723, are coupling systems comprising auxiliary connecting elements which are, however, in the last analysis always secured by means of screw couplings.

A rapid coupling system as outlined above is also known from DE-U-9006000.

Those coupling systems are hardly practical when dismounting and mounting the blades, which operations may have to be carried out particularly frequently, for example for maintenance purposes.

European Patent Application no. 891688 describes a system for the rapid coupling of blades, in which the screws for securing the blades to the flanged end of the drive shaft are replaced by plugs.

However, a disadvantage common to all the above-mentioned coupling systems is the fact that small elements, such as, for example, screws, nuts, or auxiliary connecting elements, that have to be removed in order to enable the blades to be dismounted, are easily mislaid in the surroundings where such an operation is carried out.

The problem underlying the present invention is to provide a system for the rapid coupling of blades for rotary harrows which is designed structurally and functionally for the purpose of overcoming the disadvantages explained above with reference to the mentioned prior art. The principal object of the invention is to provide a kit for converting a rotary harrow having a conventional coupling system in such a manner as to arrange it for the rapid coupling of blades without having to adapt or replace the flanged ends of the drive shafts.

The problem is solved and the object is achieved by the present invention by means of a rapid coupling system for blades of rotary harrows which is produced in accordance with the claims which follow.

The characteristics and advantages of the invention will become clear from the detailed description of a preferred embodiment thereof which is illustrated by way of non-limiting example with reference to the appended drawings in which:
- Figure 1 is a partly sectioned side elevation of a system for the rapid coupling of blades for rotary harrows which is produced in accordance with the present invention,
- Figure 2 is the same view of the coupling system of Figure 1, in a different operative position,

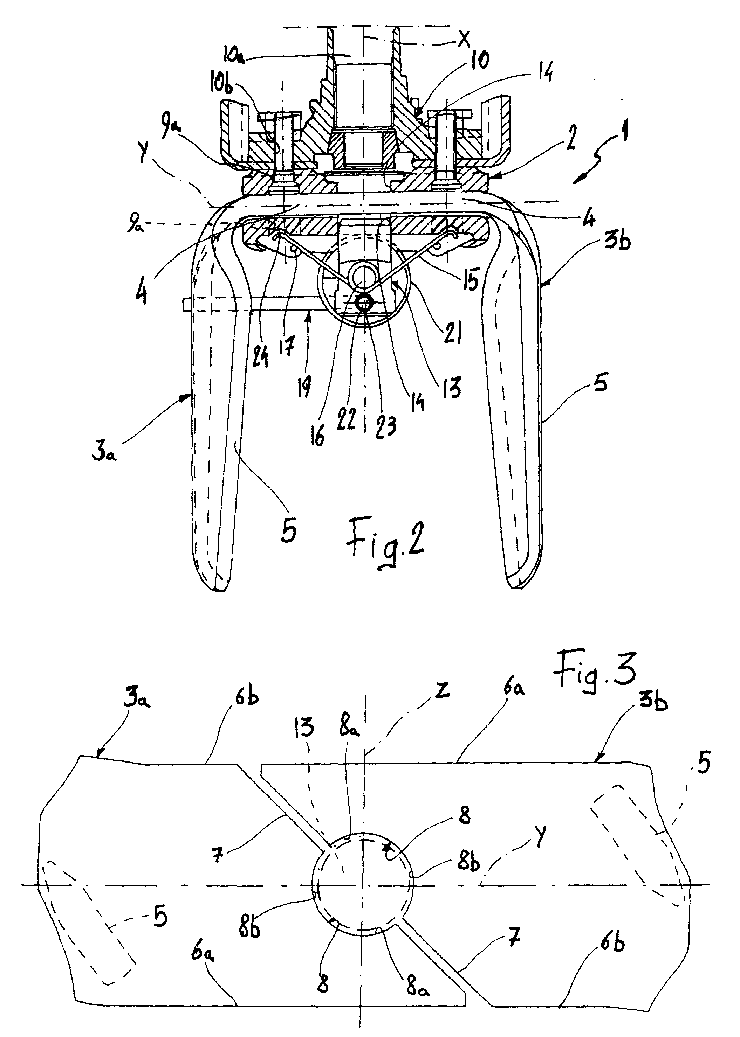

- Figure 3 is a plan view of the blades of Figure 1 in the operative position.

In the drawings, a system produced in accordance with the present invention for the rapid coupling of blades for a rotary harrow is generally indicated 1.

The rapid coupling system 1 comprises a blade-carrying unit 2 to which the blades 3a and 3b are removably secured.

The blades 3a and 3b are identical to one another and comprise respective coupling portions 4 and working portions 5 which are arranged substantially at right-angles to one another. The coupling portion 4 is substantially in a plate-like form in which are defined side edges 6a and 6b which are substantially parallel to one another and an end edge 7 defining the end of the coupling portion 4 remote from the working portion 5.

The coupling portion 4 is shaped in such a manner that the end edge 7 is inclined relative to the direction defined by the side edges 6a and 6b and has a semi-circular recess 8 at its central portion.

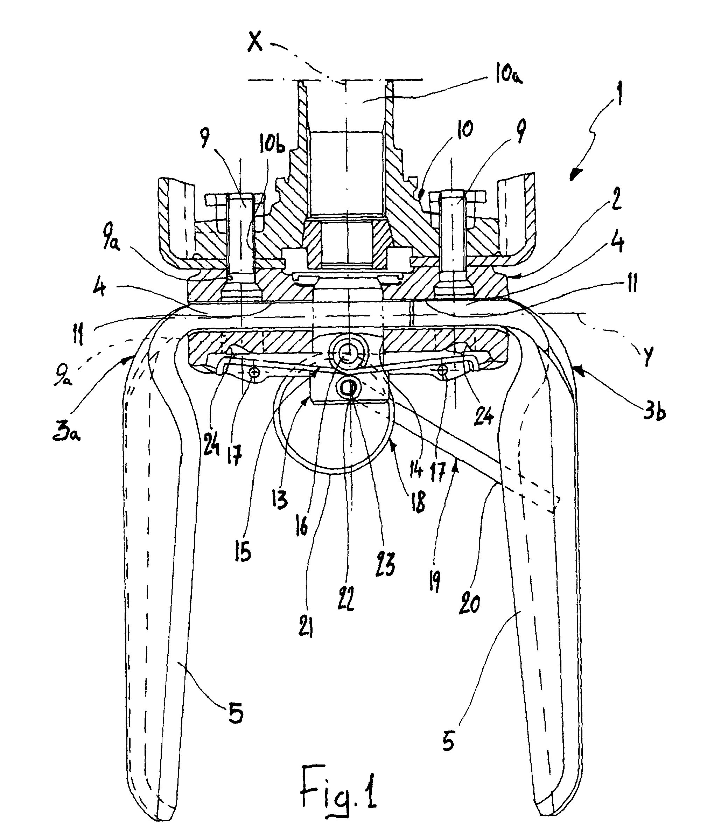

The blade-carrying unit 2 is secured by means of a plurality of screws 9 to a flanged end 10 of a drive shaft 10a which is indicated only partially in Figure 1 and which is able to rotate about an axis X.

The drive shaft 10a is conventional per se, being already present on rotary harrows currently on the market, and originally provided for the direct fastening of the blades to the flanged end 10.

Advantageously, the blade-carrying unit 2 has holes 9a receiving the screws 9 and corresponding to the respective holes 10b of the flanged end 10 and can therefore be fitted directly to the flanged end 10 in place of and in a position corresponding to that of conventional screw-fastened blades without any kind of adaptation or replacement.

The blade-carrying unit 2 is traversed by a through-opening extending transversely to the axis of rotation X and defining two seats 11 aligned in a sliding direction Y, the function of which will be explained hereinafter. Each seat 11 is provided to hold and guide the respective coupling portion 4 of one of the blades 3a and 3b.

The rapid coupling system 1 also comprises a plug 13, associated with the blade-carrying unit 2, for keeping the blades 3a and 3b locked in the respective seats 11. The plug 13 is guided in a hole 14 in a central portion of the blade-carrying unit 2 in order to penetrate into the seats 11 in a manner substantially parallel to the axis X and perpendicular to the sliding direction Y.

The plug can be translated in direction X between an operative position in which it is at least partially inserted in the seats 11 through the hole 14 (Figure 1) and a non-operative position in which it is not engaged in any way in the seats 11 (Figure 2).

The plug 13 is constantly urged into the operative position by a spring 15 which is wound, at an intermediate portion thereof, onto an appendage 16 extending from the plug 13 and which engages at its ends on pegs 17 arranged on the blade-carrying unit 2 on opposite sides relative to the plug 13.

In order to move the plug 13 from the operative position, against the action of the spring 15, it is advantageous to use a tool 18 which comprises a rod 19 provided with a grip 20 and which has a cam 21 fixedly joined to an intermediate position thereof. The free end 22 of the rod 19 is inserted into a hole 23 formed in the plug 13 and, by rotating the cam 21 by means of the grip 20, the plug 13 is moved away from the seats 11 in direction X.

In order to receive the ends of the spring 15, which are likewise displaced by the movement of the plug 13, cavities 24 are provided on the blade-carrying unit 2.

In that non-operative position, in which the plug 13 does not engage in any way in the seats 11, the coupling portions 4 of the blades 3a and 3b can be inserted into the respective seats 11, being guided by the seats in the sliding direction Y (Figure 2).

Once the coupling portions 4 have been inserted in the seats 11, their respective end edges 7 and recesses 8 are facing one another. In particular, the recesses 8 define a circular opening which is aligned in direction X with a counter-opening defined by the hole 14 for receiving the plug 13.

In order to lock the coupling portions inside the respective seats 11, the tool 18 is released, enabling the plug 13 to move into the operative position under the action of the spring 15.

It will be noted that any movement of the blades 3a and 3b and the blade-carrying unit 2 relative to one another is prevented by the coupling system described above and, in particular, any movement in the sliding direction Y is blocked by the plug 13, because the semi-circular shape of the recesses 8 and the inclination of the end edge 7 relative to the sliding direction Y are such that a plane Z, which is in a central position relative to the plug 13 and perpendicular to the sliding direction Y, determines, for each recess 8, juxtaposed surfaces 8a and 8b which surround the plug 13, likewise on opposite sides relative to the plane Z. The surfaces 8a and 8b interfere with the plug 13 in direction Y; in particular, the surface 8a, which is more remote from the working portion 5, prevents the coupling portion 4 from being removed from the blade-carrying unit 2, while the surface 8b limits the insertion of the coupling portion 4 into the seat 11. In practice, the projections of the surfaces 8a and 8b on the plane Z in the sliding direction Y are at least partially superposed.

In order to dismount the blades 3a and 3b, all that is necessary is to move the plug 13 into the non-operative position by means of the tool 18, repeating the actions described above, and to remove the coupling portions 4 from the seat 11.

It will be appreciated that, advantageously, no element of the coupling system is removed during the dismounting operation, thus preventing any elements from being mislaid.

In addition, a possible variant of the embodiment illustrated is the provision of different forms of recesses and plug, or recesses formed in the side edges in addition to those formed in the end edge.

A simple variant of the coupling system described above in the preferred embodiment provides for a plurality of plugs and respective recesses.

The invention thus solves the problems indicated above with reference to the mentioned prior art, speeding up and simplifying the operations of mounting and dismounting the rotary harrow blades while ensuring that the blades are locked very securely in the seats while the machine is in use.

A major advantage provided by the invention is that the coupling system can be fitted also to conventional rotary harrows simply by securing the blade-carrying unit, instead of the conventional screw-fastened blades, to the flanged end of the drive shaft without having to carry out any adaptation or replacement operation on that flanged end.

A further advantage is that it is possible to use a single plug to lock both coupling portions of the blades in the operative position inside the seat of the blade-carrying unit, even when those coupling portions are coplanar with one another.

## Claims

1. A system for the rapid coupling of blades for rotary harrows, the system comprising blades and a blade-carrying unit (2) in which is defined a seat (11) for receiving a coupling portion (4) of the respective blade (3a, 3b) for each blade mounted on the unit, the coupling portion being removably insertable and held and guided in the seat in a sliding direction, and there are provided at least one opening (8) in the coupling portion and a respective counter-opening (14) in the blade-carrying unit, which openings can be substantially aligned in a direction transverse to the sliding direction when the coupling portions are inserted in the respective seats, and at least one plug (13) which is removably insertable into the opening and counter-opening in order to restrain the coupling portion in the respective seat, the at least one opening being constituted by a recess (8) which is not completely closed on itself and which is formed in an edge (6a, 6b, 7) of the coupling portion,
the at least one recess (8) being formed in an end edge (7), the end edge being defined on the coupling portion (4) as an edge portion facing an adjacent coupling portion,
**characterised in that** the at least one recess comprises a first and a second surface (8a, 8b) which are opposite one another relative to a plane which is perpendicular to the sliding direction and in a central position relative to the at least one plug (13), the first and second surfaces surrounding the at least one plug on opposite sides of the plane, the respective projections of the portions on the plane in the sliding direction being at least partially superposed.

2. A rapid coupling system according to claim 1, wherein the at least one recess (8), when in the operative position, faces a corresponding recess of the adjacent coupling portion (4) in order to surround the at least one plug (13) on opposite sides.

3. A rapid coupling system according to claim 1 or 2, wherein the at least one recess (8) is semi-circular and the end edge (7) intersects the sliding direction in a non-perpendicular manner.

4. A rapid coupling system according to one or more of the preceding claims, wherein a single plug (13) is provided in order to restrain two or more of the coupling portions (4), the coupling portions being coplanar with one another in the operative position.

5. A rapid coupling system according to one or more of the preceding claims, wherein the blades (3a, 3b) are in an identical form.

6. A rapid coupling system according to one or more of the preceding claims, wherein return means (15) are provided which act on the at least one plug in order to urge it towards an operative position in which the at least one plug is engaged in the opening and counter-opening.

7. A rapid coupling system according to claim 6, wherein the return means are of a resilient type and comprise a spring (15) which is active between the blade-carrying unit (2) and the at least one plug.

8. A kit for converting a rotary harrow in order to arrange it for the rapid coupling of blades, wherein a flanged end (10) arranged for the screw-fastening of the blades is provided for each shaft (10a) driving the blades, the kit comprising a respective rapid blade-coupling system (1) for each of the drive shafts according to one or more of the preceding claims, the coupling system comprising a blade-carrying unit (2) arranged for screw-fastening to the flanged end, in place of and at the position of the screw-fastening of the blades.

## Patentansprüche

1. System für die Schnellschlusskupplung von Zinken für Kreiseleggen, wobei das System Zinken und eine Zinkenträgereinheit (2) aufweist, in der für jede auf der Einheit montierte Zinke ein Sitz (11) zur Aufnahme eines Kupplungsbereichs (4) der entsprechenden Zinke (3a, 3b) ausgebildet ist, wobei der Kupplungsbereich entfernbar einsetzbar und gehalten und in einer Richtung verschiebbar in dem Sitz geführt ist, und
wobei mindestens eine Öffnung (8) in dem Kupplungsbereich und eine entsprechende Gegenöffnung (14) in der Zinkenträgereinheit vorgesehen ist, wobei die Öffnungen im Wesentlichen in einer Richtung quer zur Verschieberichtung ausrichtbar sind, wenn die Kupplungsbereiche in die entsprechenden Sitze eingesetzt sind, und mit mindestens einem Bolzen (13), der entfernbar in die Öffnung und die Gegenöffnung in dem entsprechenden Sitz einsetzbar ist, um den Kupplungsbereich in dem entsprechenden Sitz zurückzuhalten, wobei die mindestens eine Öffnung aus einer Aussparung (8) gebildet ist, die in sich nicht vollständig geschlossen ist und die in einer Kante (6a, 6b, 7) des Kupplungsbereichs ausgebildet ist,
wobei die mindestens eine Aussparung (8) in einer Endkante ausgebildet ist, wobei die Endkante auf dem Kupplungsbereich (4) als ein Kantenbereich gebildet ist, der einem benachbarten Kupplungsbereich zugewandt ist,
**dadurch gekennzeichnet, dass** die mindestens eine Aussparung eine erste und eine zweite Oberfläche (8a, 8b) aufweist, die einander relativ zu einer Ebene gegenüberliegen, die zur Verschieberichtung senkrecht ist und in einer zentralen Position bezogen auf den Bolzen (13) liegt, wobei die ersten und zweiten Oberflächen den mindestens einen Bolzen auf gegenüberliegenden Seiten der Ebene umgeben, wobei die entsprechenden Vorsprünge der Bereiche auf der Ebene in der Verschieberichtung wenigstens teilweise überlagert sind.

2. Schnellschlusskupplungssystem nach Anspruch 1, wobei die mindestens eine Aussparung (8) in der Betriebslage einer korrespondierenden Aussparung des benachbarten Kupplungsbereichs (4) zugewandt ist, um den mindestens einen Bolzen (13) auf gegenüberliegenden Seiten zu umgeben.

3. Schnellschlusskupplungssystem nach Anspruch 1 oder 2, wobei die mindestens eine Aussparung halbkreisförmig ist und wobei die Endkante (7) die Verschieberichtung nicht senkrecht schneidet.

4. Schnellschlusskupplungssystem nach einem oder mehreren der vorhergehenden Ansprüche, wobei ein einziger Bolzen (13) vorgesehen ist, um zwei oder mehr Kupplungsbereiche (4) zurückzuhalten, wobei die Kupplungsbereiche in der Betriebslage koplanar zueinander sind.

5. Schnellschlusskupplungssystem nach einem oder mehreren der vorhergehenden Ansprüche, wobei die Zinken (3a, 3b) eine identische Gestalt aufweisen.

6. Schnellschlusskupplungssystem nach einem oder mehreren der vorhergehenden Ansprüche, wobei Rückstellmittel (15) vorgesehen sind, die auf den mindestens einen Bolzen wirken, um diesen in Richtung auf eine Betriebslage zu zwingen, in der der mindestens eine Bolzen in die Öffnung und in die Gegenöffnung eingreift.

7. Schnellschlusskupplungssystem nach Anspruch 6, wobei die Rückstellmittel federelastisch ausgeführt sind und eine Feder (15) aufweisen, die zwischen der Zinkenträgereinheit (2) und dem mindestens einen Bolzen wirkt.

8. Ein Bausatz für den Umbau einer Kreiselegge um die Schnellschlusskupplung von Zinken zu ermöglichen, wobei für jede Welle (10a), die die Zinken antreibt, ein zur Schraubbefestigung der Zinken ausgebildetes Flanschende (10) vorgesehen ist, wobei der Bausatz für jede der Antriebswellen ein entsprechendes Schnellschlusskupplungssystem (1) nach einem oder mehreren der vorhergehenden Ansprüche aufweist, wobei das Kupplungssystem eine Zinkenträgereinheit (2) aufweist, die zur Schraubbefestigung an das Flanschende anstelle der und in der Lage der Schraubbefestigungen der Zinken ausgebildet ist.

## Revendications

1. Système de raccordement rapide de lames de herses rotatives, le système comprenant des lames et une unité (2) de support de lames dans laquelle est délimité un siège (11) destiné à loger une partie de raccordement (4) de la lame respective (3a, 3b) pour chaque lame montée sur l'unité, la partie de raccordement pouvant être insérée et maintenue de façon amovible et guidée dans le siège par coulissement, et au moins une ouverture (8) est formée dans la partie de raccordement et une ouverture auxiliaire respective (14) est formée dans l'unité de support de lames, ces ouvertures pouvant être pratiquement alignées dans une direction transversale à la direction de coulissement lorsque les parties de raccordement sont insérées dans les sièges respectifs, et au moins un bouchon (13) qui peut être inséré de façon amovible dans l'ouverture et l'ouverture auxiliaire pour retenir la partie de raccordement dans le siège respectif, l'ouverture au moins étant constituée par une cavité (8) qui n'est pas totalement fermée sur elle-même et qui est disposée à un bord (6a, 6b, 7) de la partie de raccordement,
ladite cavité au moins (8) étant réalisée à un bord d'extrémité (7), le bord d'extrémité étant délimité sur la partie d'accouplement (4) comme constituant une partie de bord tournée vers une partie adjacente de raccordement,
**caractérisé en ce que** ladite cavité au moins comporte une première et une seconde surface (8a, 8b) qui sont opposées l'une à l'autre par rapport à un plan perpendiculaire à la direction de coulissement et en position centrale par rapport au bouchon au moins (13), les première et seconde surfaces entourant ledit bouchon sur des côtés opposés du plan, les saillies respectives des parties sur le plan dans la direction de coulissement étant au moins partiellement superposées.

2. Système de raccordement rapide selon la revendication 1, dans lequel ladite cavité au moins (8), lorsqu'elle est en position de fonctionnement, est tournée vers une cavité correspondante de la partie adjacente de raccordement (4) afin que le bouchon au moins (13) soit entouré sur des côtés opposés.

3. Système de raccordement rapide selon la revendication 1 ou 2, dans lequel ladite cavité au moins (8) est en demi-cercle et le bord (7) d'extrémité recoupe la direction de coulissement en direction non perpendiculaire.

4. Système de raccordement rapide selon une ou plusieurs des revendications précédentes, dans lequel un bouchon unique (13) est incorporé pour retenir au moins deux parties de raccordement (4), les parties de raccordement étant coplanaires dans leur position de fonctionnement.

5. Système de raccordement rapide selon une ou plusieurs des revendications précédentes, dans lequel les lames (3a, 3b) ont des formes identiques.

6. Système de raccordement rapide selon une ou plusieurs des revendications précédentes, dans lequel un dispositif de rappel (15) est incorporé et agit sur le bouchon au moins afin que celui-ci soit repoussé vers une position de fonctionnement dans laquelle le bouchon au moins et en coopération dans l'ouverture et l'ouverture auxiliaire.

7. Système de raccordement rapide selon la revendication 6, dans lequel le dispositif de rappel est constitué d'un dispositif élastique et comprend un ressort (15) qui agit entre l'unité (2) de support de lames et le bouchon au moins.

8. Kit de transformation d'une herse rotative afin qu'elle permette un raccordement rapide de lames, dans lequel une extrémité (10) munie d'un flasque, destinée à la fixation par vissage des lames, est réalisée pour chaque arbre (10a) d'entraînement de lames, le kit comprenant un système respectif d'accouplement rapide de lames (1) pour chaque arbre d'entraînement, selon une ou plusieurs des revendications précédentes, le système de raccordement comprenant une unité (2) de support de lames destinée à la fixation par vissage à l'extrémité munie d'un flasque, à la place de la fixation par vissage des lames et à l'emplacement de cette fixation.
